# EUROPEAN PATENT APPLICATION

(11) **EP 4 644 440 A1**
(43) Date of publication of application: **05.11.2025**
(21) Application number: 23912964.6
(22) Date of filing: 28.12.2023
(51) Int. Cl.: C08F 220/56, C08F 2/38, C08F 2/50, C08F 2/44, C08K 3/22, C08J 3/075, A61L 27/52, A61L 27/50, B29C 64/112, B33Y 70/10

(54) **HYDROGEL COMPOSITION FOR 3D PRINTING, AND 3D PRINTING HYDROGEL PREPARED THEREFROM**

(30) Priority: 28.12.2022 KR 20220186679; 27.12.2023 KR 20230192749
(71) Applicant: Aldaver Inc., Daejeon 34051 (KR)
(72) Inventor: KIM, Jin-Oh, Daejeon 34040 (KR); KIM, Ikjin, Daejeon 34052 (KR); LEE, Taehoon, Daejeon 34052 (KR); KANG, Minjoo, Daejeon 34052 (KR)
(74) Representative: Dompatent Partnerschaft von Patent- und Rechtsanwälten mbB
(86) International application number: PCT/KR2023/021805
(87) International publication number: WO 2024/144290

(57) **Abstract**

The present invention relates to a hydrogel composition for 3D printing, and a 3D printing hydrogel formed using the same, hydrogel composition comprising an acrylamide-based compound, a hydrophilic thickener, an alkali compound and a solvent.

## Description

### [Technical Field]

The present application claims the benefit of priority based on Korean Patent Application Nos. 10-2022-0186679 filed on December 28, 2022 and 10-2023-0192749 filed on December 27, 2023, the entire contents of which are incorporated as part of this specification.

The present invention relates to a hydrogel composition for 3D printing and a 3D printing hydrogel prepared therefrom, and more particularly, to a hydrogel composition capable of implementing artificial organs having similar texture and physical properties to actual human organs, and usable for 3D printing due to its high viscosity, and a 3D printing hydrogel prepared therefrom.

### [Background Art]

Representative 3D printing methods include Direct Ink Writing (DIW) type printing, in which printing materials are extruded from a nozzle and printed, Polyjet type printing, where materials are ejected from a nozzle and photocrosslinked layer by layer by a light source such as ultraviolet (UV), Digital Light Processing (DLP) type printing, which lifts the substrate from the ink tank and prints by irradiating it with a light source in real time and the like.

In 3D printing, it is important to produce ink with a viscosity that can smoothly pass through the nozzle and print the desired model. In addition, the ink used in 3D printing must have rheological characteristics that can maintain the 3D structure even after printing.

Meanwhile, hydrogels with high hydrophilicity and biocompatibility are attracting attention as artificial organ materials.

Since the development of calcium alginate hydrogel around 1980, various hydrogels for biomaterials using natural or synthetic polymers have been developed, and various types of hydrogels are being developed based on the results of many studies on the physicochemical properties of hydrogels.

However, despite various studies on artificial organs based on natural or synthetic hydrogels, artificial organs with 3-dimensional structures obtained from hydrogels can have different physical properties depending on the composition and environment, and thus have significant limitations in biological and physical aspects such as biocompatibility, printability, electrocautery suitability, and rheological properties.

Among them, in the case of organs and body parts with high toughness and tensile strength inside the body, it is difficult to simulate artificial organ tissues using hydrogels similarly to reality due to the characteristics of hydrogel materials in which water makes up most of the composition.

### [Prior Art Documents]

(Patent Document 1) Korean Laid-open Patent Publication No. 10-2020-0084389 (2020.07.13)
(Patent Document 2) Korean Patent Publication No. 10-2189959 (2020.12.04)
(Patent Document 3) Korean Patent Publication No. 10-2160642 (2020.09.22)

### [Disclosure]

### [Technical Problem]

It is an object of the present invention to provide a hydrogel composition for 3D printing that can implement an artificial organ having texture and physical properties similar to actual human organs, satisfy rheological characteristics that can freely control the diameter and thickness through a method such as 3D printing by having a high viscosity, and at the same time secure characteristics suitable for application to surgical simulation.

It is another object of the present invention to provide a 3D printing hydrogel formed using the composition.

### [Technical Solution]

In one embodiment of the present invention, a hydrogel composition for 3D printing is provided, which includes an acrylamide-based compound, a hydrophilic thickener, an alkali compound, and a solvent.

The acrylamide-based compound may comprise acrylamide, metacrylamide, N-isopropylacrylamide(NIPAM), N-tert-butyl acrylamide, N,N-diethylacrylamide, N-ethylacrylamide, N-n-propylacrylamide, N,N-ethylmethylacrylamide, N-isopropylmethacrylamide, N-hydroxyethylacrylamide, N-(isobutoxymethyl)acrylamide, N-tert-butyl methacrylamide, N,N-diethylmethacrlamide, N-ethylmethacrylamide or any combination thereof.

The hydrophilic thickener may comprise carbomer, laponite, Pluronic copolymer or any combination thereof.

The alkali compound may comprise sodium hydroxide (NaOH), potassium hydroxide (KOH), triethanolamine, arginine or any combination thereof.

The composition may further comprise one or more biocompatible polymers selected from the group consisting of natural polymers and synthetic polymers.

The natural polymer may comprise cellulose, algin, alginic acid, alginate, hyaluronic acid, polypeptide, protein, gelatin, collagen, albumin, dextran, starch, casein, chitin derivatives, chitosan or any combination thereof.

The synthetic polymer may comprise polyethylene, polyethylene glycol, polycaprolactone, polyalkyl carbonate, polyamino acid, polyhydroxybutyric acid, polyorthoester, polyanhydride, Pluronic, polylactide, polyglycolide, polybutylene succinate, poly(3-hydroxybutyrate-co-3-hydroxyvalerate), polybutylene terephthalate, polytrimethylene terephthalate, polyethylene naphthalene, polylactide-co-glycolide, (polylactide-co-glycolide)-glucose, methoxy polyethylene glycol-(polycaprolactone-co-polylactide) or any combination thereof.

The composition may further comprise a crosslinking agent and an initiator.

The acrylamide-based compound may be contained in an amount of 20 to 60 parts by weight based on 100 parts by weight of the solvent.

The hydrophilic thickener may be contained in an amount of 1 to 7 parts by weight based on 100 parts by weight of the solvent.

The alkali compound may be contained in an amount of 0.1 to 5 parts by weight based on 100 parts by weight of the solvent.

The biocompatible polymer may be contained in an amount of 0.1 to 6 parts by weight based on 100 parts by weight of the solvent.

The hydrogel composition for 3D printing may be used for DIW (Direct Ink Writing) type 3D printing.

In another embodiment of the present invention, a 3D printing hydrogel formed using the composition is provided.

The elastic modulus of the 3D printing hydrogel may be 10 to 300 kPa.

The tensile strength of the 3D printing hydrogel may be 100 to 1,200 kPa.

The toughness of the 3D printing hydrogel may be 0.1 to 15.0 MJ/m³.

The 3D printing hydrogel may be an artificial blood vessel.

### [Advantageous Effects]

According to the present invention, since the composition comprises an acrylamide-based compound, a hydrophilic thickener, and an alkali compound, the physical properties of the 3D printing hydrogel formed therefrom, such as elastic modulus and tensile strength, exhibit physical properties similar to those of actual human organs, and in particular, since the viscosity of the composition is high, it is possible to secure the effect of imparting physical properties that can form artificial organs through methods such as 3D printing.

In addition, the 3D printing hydrogel formed through the composition according to the present invention has physical properties and textures similar to those of actual human organs, while also securing characteristics suitable for application to surgical simulation, and thus has the characteristic of being able to provide an artificial organ suitable for practice for actual surgeries such as blood vessel suturing.

### [Description of Drawings]

FIG. 1 is a drawing illustrating the printing suitability for 3D printing depending on whether a hydrophilic thickener and an alkali compound, which are effective ingredients, are mixed when preparing a hydrogel composition for 3D printing according to an embodiment of the present invention.
FIGS. 2 and 3 illustrate the tensile strength of a 3D printing hydrogel according to one embodiment of the present invention depending on whether it is impregnated with an ion solution.
FIG. 4 is an image illustrating the result of confirming the surface stickiness of an artificial blood vessel formed using a 3D printing hydrogel according to an embodiment of the present invention.
FIG. 5 is an image illustrating the result of confirming whether there is a leak at a suture site of an artificial blood vessel formed using a 3D printing hydrogel according to an embodiment of the present invention.
FIG. 6 is an image illustrating the result of confirming whether there is a suture of an artificial blood vessel formed using a 3D printing hydrogel according to an embodiment of the present invention.

### [Best Mode]

Hereinafter, embodiments of the present invention will be described in detail. Prior to this, terms or words used in this specification and claims should not be interpreted as limited to their usual or dictionary meanings, and should be interpreted as meanings and concepts that conform to the technical idea of the present invention based on the principle that the inventor may appropriately define the concept of the term in order to explain his own invention in the best way. Therefore, it should be understood that the configurations described in the embodiments described in this specification are only the most preferred embodiments of the present invention and do not represent all of the technical ideas of the present invention, and thus there may be various equivalents and modifications that may replace these at the time of filing of this application.

Throughout the present specification, when a part is said to 'comprise' a component, this does not mean that it excludes other components, but mean that it may comprise other components, unless specifically stated otherwise.

In addition, the description that specifies by limiting or adding components can be applied to all inventions unless there is a special limitation thereto, and is not limited to a specific invention.

In addition, throughout the description and claims of the invention herein, the singular comprises the plural unless otherwise stated.

In addition, throughout the description and claims of the invention herein, the word "or" comprises "and" unless specifically stated otherwise. Therefore, the expression "comprising A or B" means all three cases comprising A, comprising B, or comprising A and B.

In addition, the description of all numerical ranges comprise both ends and all intermediate values therebetween, unless explicitly stated otherwise.

In addition, the expression "weight average molecular weight" as used herein may mean a polystyrene conversion value measured by gel permeation chromatography (GPC), and unless specifically stated otherwise, molecular weight means weight average molecular weight.

The tissues of the human body can be largely divided into epithelial tissue and connective tissue. Throughout this specification, the term artificial organ may refer to the connective tissue of an artificial organ.

Hereinafter, a hydrogel composition for 3D printing and a 3D printing hydrogel prepared therefrom according to one embodiment of the present invention will be described.

### Hydrogel composition for 3D printing

The present invention relates to a hydrogel composition for 3D printing, which comprises an alkali compound together with an acrylamide-based compound and a hydrophilic thickener in the composition, thereby exhibiting physical properties such as elastic modulus and tensile strength of a 3D printing hydrogel formed therefrom similar to those of actual human organs, and particularly ensuring characteristics that can impart physical properties capable of forming artificial organs through a method such as 3D printing, due to the high viscosity of the composition.

The hydrogel composition for 3D printing according to an embodiment of the present invention comprises an acrylamide-based compound, a hydrophilic thickener, an alkali compound, and a solvent. Hereinafter, each component of the hydrogel composition for 3D printing of the present invention will be described in more detail.

### (1) Acrylamide-based compound

The acrylamide-based compound contained in the hydrogel composition for 3D printing according to the present invention is a type of hydrogel exhibiting the characteristic of being water-swellable, and after the composition according to the present invention is hardened, it changes into a polymer, polyacrylamide, and thus can form a structure of an interpenetrating polymer network (IPN) or a semi-interpenetrating polymer network (semi-IPN).

That is, the acrylamide-based compound forms a polymer, thereby improving the physical and mechanical properties of the 3D printing hydrogel formed from the composition containing it so that it can have tensile strength and elastic modulus similar to those of actual human organs.

In one embodiment of the present invention, the acrylamide-based compound may comprise acrylamide, metacrylamide, N-isopropylacrylamide(NIPAM), N-tert-butyl acrylamide, N,N-diethylacrylamide, N-ethylacrylamide, N-n-propylacrylamide, N,N-ethylmethylacrylamide, N-isopropylmethacrylamide, N-hydroxyethylacrylamide, N-(isobutoxymethyl)acrylamide, N-tert-butyl methacrylamide, N,N-diethylmethacrlamide, N-ethylmethacrylamide or any combination thereof, and specifically, acrylamide or metacrylamide may be used as the acrylamide-based compound, and for example, acrylamide and metacrylamide may be mixed and used in a weight ratio of 1 to 2:1.

In an embodiment of the present invention, the acrylamide-based compound may be contained in an amount of 20 to 60 parts by weight based on 100 parts by weight of the solvent contained in the composition, and, for example, may be contained in an amount of 20 parts by weight or more, 25 parts by weight or more, 30 parts by weight or more, 35 parts by weight or more or 40 parts by weight or more, and may be contained in an amount of 60 parts by weight or less, 55 parts by weight or less, 50 parts by weight or less or 45 parts by weight or less.

If the content of the acrylamide-based compound is less than 20 parts by weight based on 100 parts by weight of a solvent in the composition, the physical properties such as tensile strength and carbon coefficient of the 3D printing hydrogel formed from the composition containing the acrylamide-based compound may not be suitable for an artificial organ. If the content exceeds 60 parts by weight, since the sol properties may be excessively strengthened at the 'sol-gel transition' stage during the curing process of the composition, it may not be suitable for 3D printing, which is one of the methods of forming artificial organs, and since the content of acrylamide-based compound is excessive, there is a concern that the physical properties may differ from those of actual human organs due to an excessive increase in modulus as a result of over-curing of the composition during the curing process. Therefore, the content of the acrylamide-based compound in the composition is appropriately adjusted within the above range.

### (2) Hydrophilic thickener

The hydrophilic thickener plays a role in controlling the fluidity, viscosity, etc. of the composition according to the present invention.

Specific types of such hydrophilic thickener comprise carbomer, laponite, Pluronic copolymer, or any combination thereof.

The carbomer is also called carboxyvinyl polymer and has the characteristic of being able to control the fluidity, viscosity, hardness, etc. of the composition in various ways. In particular, the carbomer is used together with an alkali compound described below to cross-link the carbomer polymer represented by Formula 1 below, etc., thereby increasing the viscosity of the composition. In addition, in the case of the carbomer, the change in physical properties according to the change over time is small and it is not sensitive to the temperature change of the composition, and it also has the characteristic of securing the transparency of the material itself.

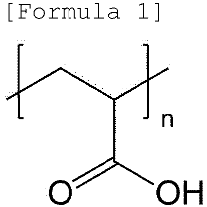

In relation to this thickening effect, when the carbomer is dispersed in the solvent in the composition, it is first fixed by hydrogen bonding with the solvent molecule, and does not impart significant viscosity to the composition before applying the alkali compound, etc., but when the alkali compound is introduced into the composition and ionized, the carbomer expands and imparts viscosity.

The Pluronic copolymer may be various copolymers sold under the trade name Pluronic by BASF, and examples thereof comprise various copolymers such as F127, P105, and derivatives thereof, but are not limited thereto.

The Pluronic copolymer may be a di(meth)acrylated Pluronic copolymer further containing a substituent capable of bonding with an acrylamide-based monomer which is another molecule in the composition having substituents that enable intermolecular bonding at both ends.

In order to provide physical properties suitable for an artificial blood vessel, the carbomer may be more suitable as the hydrophilic thickener.

In one embodiment of the present invention, the hydrophilic thickener may be contained in an amount of 1 to 7 parts by weight based on 100 parts by weight of the solvent contained in the composition, and for example, may be contained in an amount of 1 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2 parts by weight or more, 2.1 parts by weight or more, 2.2 parts by weight or more, 2.3 parts by weight or more, 2.4 parts by weight or more, 2.5 parts by weight or more, 2.6 parts by weight or more, 2.7 parts by weight or more, 2.8 parts by weight or more, 2.9 parts by weight or more, 3 parts by weight or more, 3.1 parts by weight or more, 3.2 parts by weight or more, 3.3 parts by weight or more, 3.4 parts by weight or more or 3.5 parts by weight or more, and may be contained in an amount of 7 parts by weight or less, 6.9 parts by weight or less, 6.8 parts by weight or less, 6.7 parts by weight or less, 6.6 parts by weight or less, 6.5 parts by weight or less, 6.4 parts by weight or less, 6.3 parts by weight or less, 6.2 parts by weight or less, 6.1 parts by weight or less, 6 parts by weight or less, 5.9 parts by weight or less, 5.8 parts by weight or less, 5.7 parts by weight or less, 5.6 parts by weight or less, 5.5 parts by weight or less, 5.4 parts by weight or less, 5.3 parts by weight or less, 5.2 parts by weight or less, 5.1 parts by weight or less, 5 parts by weight or less, 4.9 parts by weight or less, 4.8 parts by weight or less, 4.7 parts by weight or less, 4.6 parts by weight or less, 4.5 parts by weight or less, 4.4 parts by weight or less, 4.3 parts by weight or less, 4.2 parts by weight or less, 4.1 parts by weight or less, 4 parts by weight or less, 3.9 parts by weight or less, 3.8 parts by weight or less, 3.7 parts by weight or less or 3.6 parts by weight or less.

If the content of the hydrophilic thickener is less than 1 part by weight based on 100 parts by weight of the solvent of the composition, the gelation characteristics of the composition are inhibited, and as a result, the viscosity of the composition is lowered, thereby making it unsuitable for the 3D printing method, which is one of the methods of forming an artificial organ. If the content exceeds 7 parts by weight, the hydrophilic thickener may not dissolve smoothly in the solvent or the viscosity of the composition may excessively increase after dissolution, thereby excessively reducing the fluidity for forming an artificial organ and reducing the manufacturing efficiency. Therefore, the content of the hydrophilic thickener in the composition is appropriately adjusted within the above range.

### (3) Alkali compound

The alkali compound contained in the composition according to the present invention plays a role in providing the composition according to the present invention with rheological characteristics that enable 3D printing by imparting a thickening effect to the above-described hydrophilic thickener and specifically, as shown in Table 1 below, the alkali compound is ionized and thus, the viscosity of the composition can be secured by combining and fixing the hydrophilic thickener, for example, the carboxyl group of the carbomer, dispersed in the solvent.

**[Table 1]**

| Step | Process | State |
|---|---|---|
| 1 | Before the hydrophilic thickener is added to the solvent, functional groups such as carboxyl groups form intramolecular bonds and clump together. | 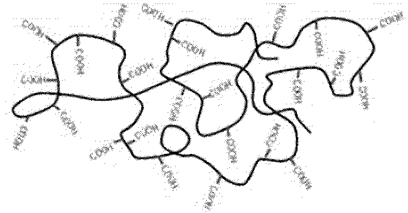 |
| 2 | When the hydrophilic thickener is injected into the solvent, functional groups such as carboxyl groups bind to the solvent molecules, and the hydrophilic thickener is dispersed in the solvent. | 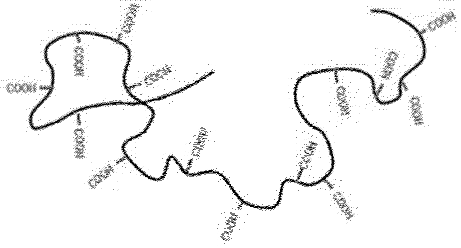 |
| 3 | By adding more alkali compound to the solvent, the charges of the ionized alkali compound and the functional groups such as the carboxyl group of the hydrophilic thickener are neutralized. | 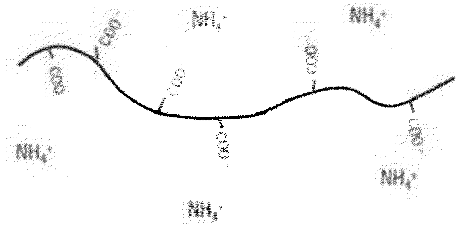 |
| | Accordingly, only the negative charge of the carboxylate exists in the main chain of the hydrophilic thickener, and the hydrophilic thickener can exist in a non-aggregated state due to the repulsion of the negative charges, thereby increasing the viscosity of the composition. | |

In an embodiment of the present invention, the alkali compound may be sodium hydroxide (NaOH), potassium hydroxide (KOH), triethanolamine, arginine or any combination thereof, and specifically sodium hydroxide (NaOH) can be used.

In an embodiment of the present invention, the content of the alkali compound may be contained in an amount of 0.1 to 5 parts by weight based on 100 parts by weight of the solvent contained in the composition, and for example, may be contained in an amount of 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more, 1 parts by weight or more, 1.1 parts by weight or more, 1.2 parts by weight or more, 1.3 parts by weight or more, 1.4 parts by weight or more, 1.5 parts by weight or more, 1.6 parts by weight or more, 1.7 parts by weight or more, 1.8 parts by weight or more, 1.9 parts by weight or more, 2 parts by weight or more, 2.1 parts by weight or more, 2.2 parts by weight or more, 2.3 parts by weight or more, 2.4 parts by weight or more, 2.5 parts by weight or more, 2.6 parts by weight or more, 2.7 parts by weight or more, 2.8 parts by weight or more, 2.9 parts by weight or more or 3 parts by weight or more, and may be contained in an amount of 5 parts by weight or less, 4.9 parts by weight or less, 4.8 parts by weight or less, 4.7 parts by weight or less, 4.6 parts by weight or less, 4.5 parts by weight or less, 4.4 parts by weight or less, 4.3 parts by weight or less, 4.2 parts by weight or less, 4.1 parts by weight or less, 4 parts by weight or less, 3.9 parts by weight or less, 3.8 parts by weight or less, 3.7 parts by weight or less, 3.6 parts by weight or less, 3.5 parts by weight or less, 3.4 parts by weight or less, 3.3 parts by weight or less, 3.2 parts by weight or less or 3.1 parts by weight or less.

If the content of the alkali compound is less than 0.1 parts by weight, the thickening effect of a hydrophilic thickener may not be sufficient, and if the content exceeds 5 parts by weight, it may not provide sufficient thickening effect to the composition and residual salts may occur.

### (4) Biocompatible polymer

The composition for forming an artificial blood vessel according to the present invention may further include a biocompatible polymer together with the acrylamide-based compound, the hydrophilic thickener, and the alkali compound.

The biocompatible polymer may be selected from the group consisting of natural polymers and synthetic polymers.

In an embodiment of the present invention, the natural polymer may comprise cellulose, algin, alginic acid, alginate, hyaluronic acid, polypeptide, protein, gelatin, collagen, albumin, dextran, starch, casein, chitin derivative, chitosan or any combination thereof, and specifically, the natural polymer that is a biocompatible polymer may be preferably cellulose.

In an embodiment of the present invention, the synthetic polymer may comprise polyethylene, polyethylene glycol, polycaprolactone, polyalkyl carbonate, polyamino acid, polyhydroxybutyric acid, polyorthoester, polyanhydride, Pluronic, polylactide, polyglycolide, polybutylene succinate, poly(3-hydroxybutyrate-co-3-hydroxyvalerate), polybutylene terephthalate, polytrimethylene terephthalate, polyethylene naphthalene, polylactide-co-glycolide, (polylactide-co-glycolide)-glucose, methoxy polyethylene glycol-(polycaprolactone-co-polylactide) or any combination thereof.

However, the composition according to the present invention has a feature that the viscosity of the composition can be controlled by providing a thickening effect by the hydrophilic thickener and the alkali compound contained in the composition. Therefore, if the biocompatible polymer is an ionic compound, the viscosity of the composition controlled by the hydrophilic thickener and the alkali compound can change, and thus the biocompatible polymer can be a nonionic compound.

In an embodiment of the present invention, the content of the biocompatible polymer can be contained in an amount of 0.1 to 6 parts by weight based on 100 parts by weight of the solvent contained in the composition.

Specifically, if the biocompatible polymer is cellulose, which is a natural polymer, it may be contained in an amount of 0.3 to 2 parts by weight based on 100 parts by weight of the solvent contained in the composition, for example, 0.8 to 1.75 parts by weight, specifically, 1.2 to 1.5 parts by weight.

If the content of the cellulose is 0.3 parts by weight or less, when performing electrosurgery through the 3D printing hydrogel formed by the composition according to the present invention, for example, an artificial blood vessel, which is an artificial organ, there is a concern that the sealing of the blood vessel may not proceed smoothly during bipolar surgery using the positive electrode of the surgical instrument. If the content exceeds 2 parts by weight, there is a concern that the cellulose in the composition may not be smoothly dispersed and thus may aggregate.

Specifically, if the biocompatible polymer is gelatin, which is a natural polymer, it may be contained in an amount of 0.3 to 3 parts by weight based on 100 parts by weight of the solvent contained in the composition, and for example, may be contained in an amount of 0.8 to 2 parts by weight, specifically, 1.0 to 1.5 parts by weight.

If the content of the gelatin is 0.3 parts by weight or less, when performing electrosurgery through the 3D printing hydrogel formed by the composition according to the present invention, for example, an artificial blood vessel, which is an artificial organ, there is a concern that the sealing of the blood vessel may not proceed smoothly during bipolar surgery using the positive electrode of the surgical instrument. If the content exceeds 3 parts by weight, the gelatin in the composition may not be sufficiently dissolved, and there is a concern that the viscosity of the composition may increase excessively.

Specifically, if the biocompatible polymer is polyethylene glycol, which is a synthetic polymer, it may be contained in an amount of 0.5 to 6 parts by weight based on 100 parts by weight of the solvent contained in the composition, and for example, may be contained in an amount of 1 to 4.5 parts by weight, specifically, 2 to 4 parts by weight.

If the content of the polyethylene glycol is 0.5 parts by weight or less, when performing electrosurgery through the 3D printing hydrogel formed by the composition according to the present invention, for example, an artificial blood vessel, which is an artificial organ, there is a concern that the sealing of the blood vessel may not proceed smoothly during bipolar surgery using the positive electrode of the surgical instrument. If the content exceeds 6 parts by weight, there is a concern that polyethylene glycol in the composition may not be sufficiently dissolved, and it may not be easy to control the viscosity of the composition that can form a 3D printing hydrogel.

Specifically, if the biocompatible polymer is chitosan, which is a natural polymer, it may be contained in an amount of 0.1 to 2 parts by weight based on 100 parts by weight of the solvent contained in the composition, and for example, may be contained in an amount of 0.5 to 1.5 parts by weight, specifically, 0.8 to 1.1 parts by weight.

If the chitosan content is 0.1 parts by weight or less, when performing electrosurgery through the 3D printing hydrogel formed by the composition according to the present invention, for example, an artificial blood vessel, which is an artificial organ, there is a concern that the sealing of the blood vessel may not proceed smoothly during the bipolar surgery using the positive electrode of the surgical instrument. If the content exceeds 2 parts by weight, chitosan in the composition may not be sufficiently dissolved, and the rheological characteristics of the composition capable of forming an artificial blood vessel may be inhibited, and thus it may not be easy to form an artificial blood vessel through methods such as 3D printing.

Specifically, if the biocompatible polymer is alginate, which is a natural polymer, it may be contained in an amount of 0.1 to 3 parts by weight based on 100 parts by weight of the solvent contained in the composition, and for example, may be contained in an amount of 0.3 to 2 parts by weight, specifically, 0.6 to 1 part by weight.

If the content of alginate is 0.1 parts by weight or less, when performing electrosurgery through a 3D printing hydrogel formed with the composition according to the present invention, for example, an artificial blood vessel, which is an artificial organ, the sealing of the blood vessel may not proceed smoothly during the bipolar surgery using the positive electrode of the surgical instrument, and in addition, if the alginate is applied as a biocompatible polymer, a post-process is additionally introduced to allow ions to bind, and as a result of the content being insufficient, the portion to which the ions can bind is reduced, and thus the effect of the introduction of the biocompatible polymer may be reduced. If the content of the alginate exceeds 3 parts by weight, the alginate in the composition may not be sufficiently dissolved, and there is concern that it may not be easy to control the viscosity of the composition that can form an artificial blood vessel.

### (5) Solvent

In an embodiment of the present invention, the solvent in the composition is not limited in type as long as it can dissolve each component well, such as an acrylamide-based compound, a hydrophilic thickener, an alkali compound, and one or more biocompatible polymers selected from the group consisting of natural polymers and synthetic polymers. For example, an aqueous solvent such as water can be used.

The content of the solvent can be contained in an amount that allows each component in the composition to be contained within a desirable range according to the purpose of the present invention.

### (6) Other components

The hydrogel composition for 3D printing of the present invention may further include a crosslinking agent and an initiator in addition to the components described above for controlling physical properties.

The crosslinking agent can play a role in further improving the physical and mechanical properties and chemical stability of the 3D printing hydrogel by crosslinking each component in the composition, specifically. Therefore, the crosslinking agent may not be limited in type as long as it is a substance capable of crosslinking each component in the composition of the present invention, and for example, may be at least one selected from the group consisting of N,N'-methylenebisacrylamide (MBA), trimethylolpropane tri(meth)acrylate, ethylene glycol di(meth)acrylate, polyethylene glycol(meth)acrylate, polyethylene glycol di(meth)acrylate, propylene glycol di(meth)acrylate, polypropylene glycol(meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin and ethylene carbonate. By using polyethylene glycol or tannic acid together with the above type of crosslinking agent, or by using them together, the crosslinking effect of each component in the composition can be further increased.

In the case of the crosslinking agent, it may be contained in an amount of 0.01 to 0.1 parts by weight based on 100 parts by weight of the solvent in the composition according to the present invention, and for example, may be contained in an amount of 0.01 parts by weight or more, 0.02 parts by weight or more, 0.03 parts by weight or more, 0.04 parts by weight or more or 0.05 parts by weight or more, and may be contained in an amount of 0.1 parts by weight or less, 0.09 parts by weight or less, 0.08 parts by weight or less, 0.07 parts by weight or less or 0.06 parts by weight or less. If the content of the crosslinking agent is less than the above range, for example, sufficient crosslinking may not be formed to provide mechanical strength and chemical stability to the artificial blood vessel, and if the content exceeds the above range, there is a concern that excessive crosslinking may be formed and thus physical properties such as tensile may deteriorate.

The initiator is a substance used to initiate a chain reaction for the curing of the above composition, and specifically refers to a substance that easily generates radicals using a light source such as UV or heat energy, and may comprise a photoinitiator or a thermosetting initiator depending on its operating principle. The photoinitiator may not be limited in type as long as it is a substance that can initiate a curing reaction by a light source, and for example, may be at least one selected from the group consisting of IRGACURE 2959 (2-hydroxy-1-[4-(2-hydroxyethoxy)phenyl]-2-methyl-1-propanone), IRGACURE 500 (1-hydroxy-cyclohexyl-phenyl-ketone and benzophenone) and IRGACURE 754 (oxy-phenyl-acetic acid 2-[2 oxo-2 phenyl-acetoxy-ethoxy]-ethyl ester, 2-hydroxy-6'-(2-hydroxyethoxy)-2-methylpropiophenone and oxy-phenyl-acetic 2-[2hydroxy-ethoxy]-ethyl ester).

The thermosetting initiator may not be limited in type as long as it is a substance capable of initiating a curing reaction by heat energy, and for example, may be at least one selected from the group consisting of ammonium persulfate, potassium persulfate, sodium persulfate, ammonium bisulfate, sodium bisulfate, 1,1-azobis(1-methylbutyronitrile-3-sodium sulfonate) and 4,4-azobis(4-cyanovaleric acid), and preferably, ammonium persulfate (APS) or potassium persulfate may be used.

In the case of the initiator, it may be contained in an amount of 0.1 to 1.8 parts by weight based on 100 parts by weight of the solvent in the composition according to the present invention, and for example, may be contained in an amount of 0.1 parts by weight or more, 0.2 parts by weight or more, 0.3 parts by weight or more, 0.4 parts by weight or more, 0.5 parts by weight or more, 0.6 parts by weight or more, 0.7 parts by weight or more, 0.8 parts by weight or more, 0.9 parts by weight or more or 1.0 parts by weight or more, and may be contained in an amount of 1.8 parts by weight or less, 1.7 parts by weight or less, 1.6 parts by weight or less, 1.5 parts by weight or less, 1.4 parts by weight or less, 1.3 parts by weight or less, 1.2 parts by weight or less or 1.1 parts by weight or less. If the content of the initiator is less than the above range, the curing process of the composition according to the present invention may not proceed smoothly or the curing time may be excessively delayed. In particular, in the case of the hydrogel composition for 3D printing according to the present invention, since a 3D printing hydrogel such as an artificial blood vessel can be formed through an extrusion method, there is a concern that a blood vessel with a complete circular cross-section may not be formed because rapid curing does not proceed if the content of the initiator is too low. If the content of the initiator exceeds the above range, a rapid radical reaction may proceed, thereby causing a side reaction or unintended effects on other components of the composition according to the present invention, and excessive residual components may remain after curing.

The hydrogel composition for 3D printing according to the present invention may further include additives such as a surfactant, a plasticizer, a stabilizer, an antifoaming agent, and a diluent in addition to the crosslinking agent and initiator. The additives may be contained in a minimum amount that can cause the above-described action from an economical perspective, and preferably, may be contained in an amount of 0.01 to 5 wt% based on the total weight of the hydrogel composition for 3D printing.

In an embodiment of the present invention, the hydrogel composition for 3D printing can be prepared by, for example, first adding the hydrophilic thickener to the solvent, sufficiently stirring, then adding the alkali compound, the acrylamide-based compound, the biocompatible polymer, the crosslinking agent and the initiator to prepare a mixture, and uniformly stirring the mixture to remove air bubbles in the mixture.

### 3D printing hydrogel

The hydrogel composition for 3D printing of the present invention can be thermoset or UV cured, and has a curing time suitable for 3D printing, and also the hydrogel produced by 3D printing exhibits texture and physical properties very similar to actual human organs. Therefore, it can be suitably used as a 3D printing hydrogel composition for artificial organs of the DIW (Direct Ink Writing) type.

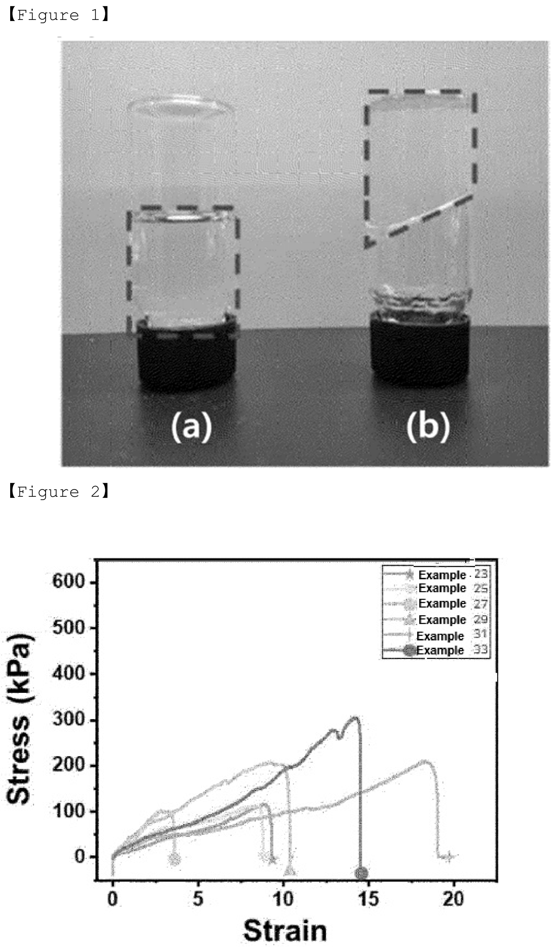

In addition, if the hydrogel composition for 3D printing is cured to prepare a hydrogel as shown in FIG. 1, since it has a high viscosity and thus is very suitable for 3D printing, and has an elastic modulus of 10 to 300 kPa, a tensile strength of 100 to 1,200 kPa, and a tensile of 0.1 to 15.0 MJ/m³, it can be used to construct connective tissue of artificial organs such as artificial kidney, artificial liver, artificial small intestine, artificial large intestine, artificial stomach, artificial gallbladder, artificial blood vessel, artificial bladder, artificial heart, artificial lung, artificial uterus, artificial colon, artificial thyroid, etc., or artificial skeletal muscle or skin.

In other words, if the elastic modulus of the hydrogel satisfies the above range, it can provide elasticity, tensile, sutureability, color, and texture very similar to those of an actual organ, and if the tensile strength and tensile meet the above ranges, it can provide properties similar to those of an actual organ in that it is not easily torn during surgical training and is sutureable, and thus can be preferably applied as an artificial organ.

### Method for preparing hydrogel composition for 3D printing

### 1. Step 1; Preparation of mixture

First, the acrylamide-based compound, the crosslinking agent, and the initiator are added to the solvent and dissolved to prepare a mixture.

As components constituting the hydrogel composition for 3D printing, the acrylamide-based compound as a material having high hydrophilicity and biocompatibility, the crosslinking agent and the initiator are used, and this is characterized by putting them in the solvent and first dissolving them to prepare them in the form of a mixture, and it is most suitable to prepare a mixture containing 20 to 60 parts by weight of the acrylamide-based compound, 0.01 to 0.1 parts by weight of the crosslinking agent, and 0.1 to 1.8 parts by weight of the initiator with respect to 100 parts by weight of the solvent.

The three-dimensional structure obtained by this hydrogel composition for 3D printing can exhibit different physical properties depending on the type and content of the components.

### 2. Step 2; Preparation of hydrogel composition for 3D printing

In this step, it is characterized by adding the hydrophilic thickener to the mixture prepared in the first step and evenly dispersing, and then adding the alkali compound and mixing them to prepare a hydrogel composition for 3D printing.

To explain, the hydrophilic thickener and the alkali compound are components that specify the physical properties of the mixture from the first step, and enable the 3D printing hydrogel formed from the composition to be used as an artificial organ. More preferably, the hydrophilic thickener may be contained in an amount of 1 to 7 parts by weight, and the alkali compound may be contained in an amount of 0.1 to 5 parts by weight based on 100 parts by weight of the solvent.

At this time, before adding the alkali compound to increase the dispersibility of the hydrophilic thickener, first adding the hydrophilic thickener and dispersing it evenly, and then adding the alkali compound and mixing them play an important role in ensuring that the 3D printing hydrogel according to the present invention has consistent properties.

### Method for preparing 3D printing hydrogel

In an embodiment of the present invention, there is no particular limitation on the method for preparing a 3D printing hydrogel to be used for an artificial organ, but for example, it can be prepared by including the following steps (a) to (d):
(a) obtaining Digital Imaging and Communications in Medicine (DICOM) data by taking a CT or MRI image of human organs;
(b) manufacturing an artificial organ mold by a 3D printer using the DICOM data;
(c) injecting the hydrogel composition for 3D printing of the present invention into the artificial organ mold; and
(d) curing the injected hydrogel composition for 3D printing and then removing the mold.

The steps (a), (b) and (c) can be performed by methods known in the art.

The mold in the step (b) may be composed of a lower mold and an upper mold having an injection port, but is not limited thereto.

The step (c) may be performed by injecting a part of the hydrogel composition for 3D printing of the present invention into the lower mold, joining the upper mold with the lower mold, and then injecting the remaining part of the hydrogel composition for 3D printing of the present invention through an injection port formed in the upper mold, but is not limited thereto.

Curing in the step (d) may be performed by thermosetting or UV curing, and at this time, the thermosetting temperature may be 70 to 90°C, and UV curing may be performed using a UV light source having a wavelength of 120 to 400 nm.

In an embodiment of the present invention, an artificial blood vessel, which is an artificial organ, can be implemented through the 3D printing hydrogel, and the hydrogel composition for 3D printing described above can be provided to a 3D printing device to form an extruded structure, and a UV curing molded product can be formed by irradiating the formed structure with a light source such as UV.

Regarding the 3D printing device, if it can form an artificial blood vessel by 3D printing using the hydrogel composition for 3D printing according to the present invention, the detailed configuration thereof may not be limited. For example, the 3D printing device may comprise an output unit that outputs the composition, a pressure control unit that controls the pressure of the output unit, a temperature control unit that controls the temperature of the output unit, a sensor unit that can sense the pressure and temperature conditions to change or select the conditions according to the type, size, and property conditions of the structure to be output, and a control unit that controls the pressure control unit and the temperature control unit.

Specifically, the output unit may further comprise a nozzle unit capable of extruding a hydrogel composition for 3D printing through a syringe pump.

In an embodiment of the present invention, the hydrogel composition for 3D printing can be output at a speed of 1 to 300 µℓ/s, specifically 5 to 200 µℓ/s through the output unit.

The nozzle unit can be a coaxial nozzle or a coaxial needle comprising a concentric core and shell portions so that the structural features of the artificial blood vessel according to the present invention can be reflected. In that case, there is an advantage in that the thickness of the blood vessel wall of the formed artificial blood vessel can be determined by appropriately adjusting the diameters of the core portion and the shell portion comprised in the coaxial nozzle.

When forming an artificial blood vessel using the coaxial nozzle, the core portion may not be injected with a composition, or air pressure may be applied to the core portion, or the core portion may be made of a material suitable for 3D printing, such as F127, a Pluronic copolymer, or a material that can be removed later, to express the hollow space inside the artificial blood vessel, and the actuation mode of the core portion can be selected depending on the components of the composition and the physical properties of the intended artificial blood vessel.

The composition for forming an artificial blood vessel can be discharged through the shell portion of the coaxial nozzle, and if the viscosity of the composition is excessively high, a strong pressure is transmitted inside the nozzle, and thus the artificial blood vessel may not be formed smoothly.

It is preferable that the artificial blood vessel output through the output unit is vertically extruded through the output unit to prevent the shape of the tube from being distorted or twisted.

The artificial blood vessel printed through the above 3D printing device can additionally undergo a curing process.

The curing process can be performed in a two-step curing process, specifically, 1) a process of curing an artificial blood vessel output through an output unit, particularly a vertically extruded one, and 2) a horizontal curing process.

Curing process 1) is a step that can be optionally applied when forming an artificial blood vessel, which is a 3D printing hydrogel according to the present invention. In the case of the artificial blood vessel printed from the output unit of a 3D printing device, curing process 1) can prevent deformation of the lower part of the printed artificial blood vessel by gravity after extrusion due to the remaining gel properties. In that case, curing process 1) can be performed as local curing using a UV point light source with a wavelength of 310 to 405 nm.

Curing process 2) is an additional curing process performed simultaneously with positioning the artificial blood vessel that has undergone curing process 1) on a horizontal moving means such as a conveyor belt. If complete curing of the artificial blood vessel does not occur through curing process 2), there is a risk that the surface of the manufactured artificial blood vessel may be sticky or the blood vessel itself may easily break.

The artificial blood vessel manufactured through the curing process can be stored in a separate ionic solution, and compared to the method of storing the artificial blood vessel in the air, it has the effect of preventing dehydration and maintaining the shape by preventing the manufactured artificial blood vessels from sticking to each other.

The ionic solution capable of storing the artificial blood vessel may be, for example, an aqueous iron chloride (FeCl₃) solution, and the concentration of the aqueous solution may be 0.2 to 0.8 mol/L, 0.3 to 0.6 mol/L, and preferably 0.35 to 0.5 mol/L.

If the concentration of the aqueous solution is less than 0.2 mol/L, it may take a long time for ions to penetrate into the formed artificial blood vessel, or swelling of the artificial blood vessel may occur in the process of allowing sufficient ions to penetrate. If the concentration of the aqueous solution exceeds 0.8 mol/L, the mechanical properties of the artificial blood vessel may differ from those of an actual blood vessel, such as the surface becoming stiff.

Hereinafter, specific examples of the present invention will be presented. However, the examples described below are only intended to specifically illustrate or explain the present invention, and the present invention is not limited thereto. In addition, any content not described herein will be omitted as it can be sufficiently technically inferred by a person skilled in the art.

### <Example 1> Preparation of hydrogel composition for 3D printing

2 g of acrylamide, 0.0013 g of N,N'-methylene bisacrylamide (MBA), and 0.0119 g of ammonium persulfate were added to 10 g of distilled water at room temperature, and dissolved them to prepare a mixture.

To the prepared mixture, 0.1 g of carbomer was added and evenly dispersed using a high-shear mixer, and then 0.04 mL of a 10 M sodium hydroxide solution was mixed to prepare a hydrogel composition 1 for 3D printing.

### <Examples 2 to 20> Preparation of hydrogel composition for 3D printing

Hydrogel compositions 2 to 20 for 3D printing were prepared in the same manner as Example 1 above, except that each active ingredient was mixed and applied according to the content of the ingredients disclosed in Table 2 below.

**[Table 2]**

| Example | Water (g) | Acrylamide (g) | MBA (g) | APS (g) | Carbomer (g) | 10 M NaOH (mL) |
|---|---|---|---|---|---|---|
| 1 | 10 | 2 | 0.0013 | 0.0119 | 0.1 | 0.04 |
| 2 | 10 | 2.5 | 0.0016 | 0.0148 | 0.1 | 0.04 |
| 3 | 10 | 3 | 0.0019 | 0.0178 | 0.1 | 0.04 |
| 4 | 10 | 3.5 | 0.0023 | 0.0206 | 0.1 | 0.04 |
| 5 | 10 | 4 | 0.0026 | 0.0237 | 0.1 | 0.04 |
| 6 | 10 | 2 | 0.0013 | 0.0119 | 0.2 | 0.08 |
| 7 | 10 | 3 | 0.0019 | 0.0178 | 0.2 | 0.08 |
| 8 | 10 | 4 | 0.0026 | 0.0237 | 0.2 | 0.08 |
| 9 | 10 | 5 | 0.0032 | 0.0297 | 0.2 | 0.08 |
| 10 | 10 | 6 | 0.0039 | 0.0356 | 0.2 | 0.08 |
| 11 | 10 | 2 | 0.0013 | 0.0119 | 0.4 | 0.16 |
| 12 | 10 | 3 | 0.0019 | 0.0178 | 0.4 | 0.16 |
| 13 | 10 | 4 | 0.0026 | 0.0237 | 0.4 | 0.16 |
| 14 | 10 | 5 | 0.0032 | 0.0297 | 0.4 | 0.16 |
| 15 | 10 | 6 | 0.0039 | 0.0356 | 0.4 | 0.16 |
| 16 | 10 | 2 | 0.0013 | 0.0119 | 0.6 | 0.24 |
| 17 | 10 | 3 | 0.0019 | 0.0178 | 0.6 | 0.24 |
| 18 | 10 | 4 | 0.0026 | 0.0237 | 0.6 | 0.24 |
| 19 | 10 | 5 | 0.0032 | 0.0297 | 0.6 | 0.24 |
| 20 | 10 | 6 | 0.0039 | 0.0356 | 0.6 | 0.24 |

### <Examples 21 and 22> Preparation of hydrogel composition for 3D printing

Each hydrogel composition 21 and 22 for 3D printing was manufactured in the same manner as Example 1 above, except that acrylamide and metacrylamide were mixed and used instead of acrylamide and each active ingredient was mixed and applied according to the content of the ingredients disclosed in Table 3 below.

**[Table 3]**

| Example | Water (g) | Acrylamide (g) | Metacrylamide (g) | MBA (g) | APS (g) | Carbomer (g) | 10 M NaOH (mL) |
|---|---|---|---|---|---|---|---|
| 21 | 10 | 2.33 | 2 | 0.0026 | 0.0237 | 0.2 | 0.08 |
| 22 | 10 | 2.33 | 2 | 0.0026 | 0.0237 | 0.4 | 0.16 |

### <Experimental Example 1> Confirmation of printing suitability of 3D printing

### 1. Experimental method

In order to confirm the printing suitability of 3D printing for DIW, in the mixture presented in Example 1 above, solution (a) before adding carbomer and sodium hydroxide and solution (b) after adding them were each put into 30 mL vials, and then it was observed whether they maintained their shape or flowed down when they were turned 180°.

### 2. Result of experiment

As illustrated in FIG. 1, it was confirmed from the results of the above experiment that all the mixtures inside the vials flowed down when the vials were turned 180° before adding carbomer and sodium hydroxide, whereas after adding carbomer and sodium hydroxide, the mixtures inside the vials did not flow out when the vials were turned 180°. Therefore, it was found that mixing the appropriate amount of carbomer and sodium hydroxide was suitable for hydrogel composition for 3D printing.

### <Experimental Example 2> Confirmation of physical properties of 3D printing hydrogels (1)

### 1. Experimental method

For the hydrogel compositions for 3D printing of the Examples 1 to 22, samples with the dimensions of 4.5 mm × 25 mm × 3 mm in length × width were prepared using a DIW 3D printer, and then were thermosetted in an oven at 80°C for 30 minutes to prepare 3D printing hydrogels.

After preparing, the mechanical properties were measured as follows using a tensile tester (manufactured by Mark).
① Elastic modulus: The elastic modulus was measured by drawing a stress-strain graph while stretching the sample at a rate of 200 mm/min until the sample broke, and then calculating the initial slope of the graph in the elastic region within the graph.
② Tensile strength: The tensile strength was measured by drawing a stress-strain graph while stretching the sample at a rate of 200 mm/min until the sample broke, and then extracting the maximum stress value from the graph.
③ Tensile: The tensile was measured by drawing a stress-strain graph while stretching the sample at a rate of 200 mm/min until the sample broke, and then calculating the area of the stress-strain graph.

### 2. Result of experiment

The results of experiment were as shown in Table 4 below.

**[Table 4]**

| Example | Elastic modulus (kPa) | Tensile strength (kPa) | Tensile (MJ/m³) |
|---|---|---|---|
| 1 | 30 | 363 | 8.54 |
| 2 | 81 | 880 | 6.34 |
| 3 | 75 | 661 | 13.5 |
| 4 | 100 | 803 | 6.47 |
| 5 | 84 | 635 | 6.0 |
| 6 | 56 | 467 | 0.73 |
| 7 | 70 | 663 | 1.75 |
| 8 | 66 | 822 | 3.70 |
| 9 | 98 | 547 | 1.59 |
| 10 | 118 | 630 | 2.41 |
| 11 | 55 | 588 | 0.89 |
| 12 | 57 | 1060 | 3.35 |
| 13 | 81 | 757 | 2.01 |
| 14 | 81 | 885 | 3.88 |
| 15 | 91 | 493 | 1.76 |
| 16 | 60 | 98 | 0.13 |
| 17 | 63 | 544 | 1.27 |
| 18 | 73 | 621 | 1.69 |
| 19 | 95 | 551 | 1.57 |
| 20 | 126 | 737 | 2.39 |
| 21 | 103 | 352 | 1.45 |
| 22 | 144 | 360 | 1.98 |

As shown in Table 4 above, it can be seen that since the 3D printing hydrogel of the present invention is characterized by having an elastic modulus of 30 to 144 kPa, a tensile strength of 90 to 1,100 kPa, and a tensile of 0.1 to 15.0 MJ/m³, and thus has properties suitable for 3D printing, it is possible to provide a hydrogel composition for 3D printing capable of implementing an artificial organ having texture and physical properties similar to those of actual human organs, and a 3D printing hydrogel prepared therefrom.

### <Examples 23 to 34> Preparation of hydrogel composition for 3D printing

Hydrogel compositions 23 to 34 for 3D printing were prepared in the same manner as in Example 1, except that the contents of the solvent, the acrylamide, the hydrophilic thickener, the alkali compound, and the crosslinking agent were as shown in Table 5 below, Irgacure 2959 was used instead of APS as an initiator, and a biocompatible polymer was further added.

**[Table 5]**

| | Water (g) | Carbomer (g) | NaOH (g) | Acrylamide (g) | Biocompatibility polymer (g) | MBA (g) | Irgacure 2959 (g) |
|---|---|---|---|---|---|---|---|
| Example 23 | 24 | 1 | 0.08 | 10 | doesn't exist | 0.0061 | 0.3 |
| | | | | | | | |
| Example 24 | 24 | 1 | 0.08 | 10 | doesn't exist | 0.0061 | 0.3 |
| | | | | | | | |
| Example 25 | 24 | 1 | 0.08 | 10 | Alginate | 0.0061 | 0.3 |
| | | | | | 0.153 | | |
| Example 26 | 24 | 1 | 0.08 | 10 | Alginate | 0.0061 | 0.3 |
| | | | | | 0.153 | | |
| Example 27 | 24 | 1 | 0.08 | 10 | Cellulose fiber | 0.0061 | 0.3 |
| | | | | | 0.33 | | |
| Example 28 | 24 | 1 | 0.08 | 10 | Cellulose fiber | 0.0061 | 0.3 |
| | | | | | 0.33 | | |
| Example 29 | 24 | 1 | 0.08 | 10 | Chitosan | 0.0061 | 0.3 |
| | | | | | 0.255 | | |
| Example 30 | 24 | 1 | 0.08 | 10 | Chitosan | 0.0061 | 0.3 |
| | | | | | 0.255 | | |
| Example 31 | 24 | 1 | 0.08 | 10 | Gelatin | 0.0061 | 0.3 |
| | | | | | 0.3 | | |
| Example 32 | 24 | 1 | 0.08 | 10 | Gelatin | 0.0061 | 0.3 |
| | | | | | 0.3 | | |
| Example 33 | 24 | 1 | 0.08 | 10 | PEG | 0.0061 | 0.3 |
| | | | | | 1.125 | | |
| Example 34 | 24 | 1 | 0.08 | 10 | PEG | 0.0061 | 0.3 |
| | | | | | 1.125 | | |

### <Experimental Example 3> Confirmation of physical properties of 3D printing hydrogels (2)

### 1. Experimental method

For the hydrogel compositions for 3D printing of the Examples 23 to 34, the compositions were extruded through a 3D printing device equipped with a coaxial nozzle, and a UV light source was irradiated thereon in the form of a point light source to manufacture artificial blood vessels. Each artificial blood vessel discharged through the printing device was divided into those impregnated with a 2.0 M FeCl₃ solution and those not impregnated. In the case of the artificial blood vessel impregnated with the FeCl₃ solution, it was further washed with distilled water after being impregnated for 60 seconds.

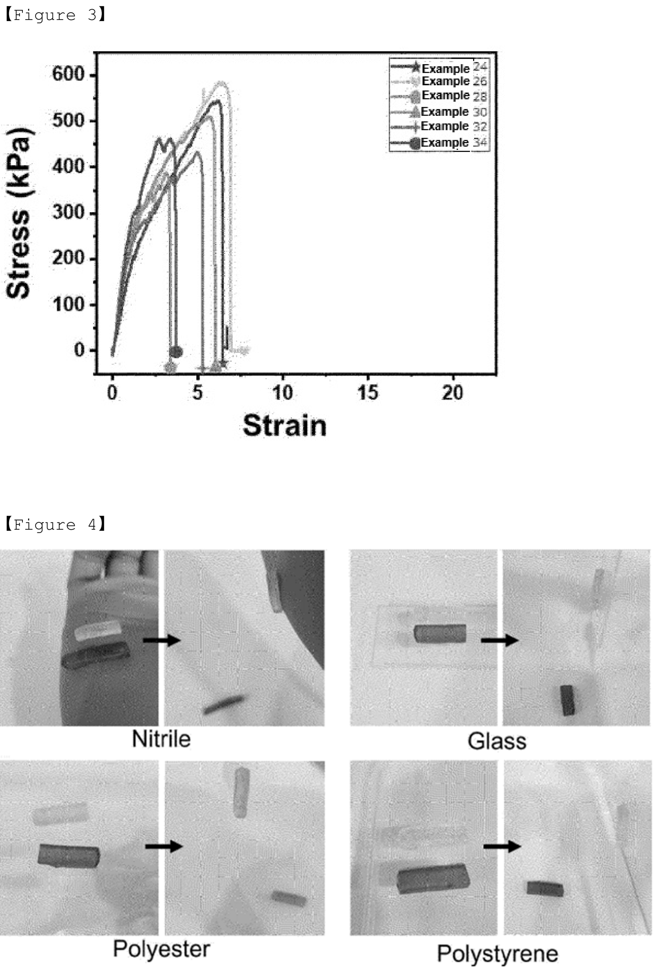

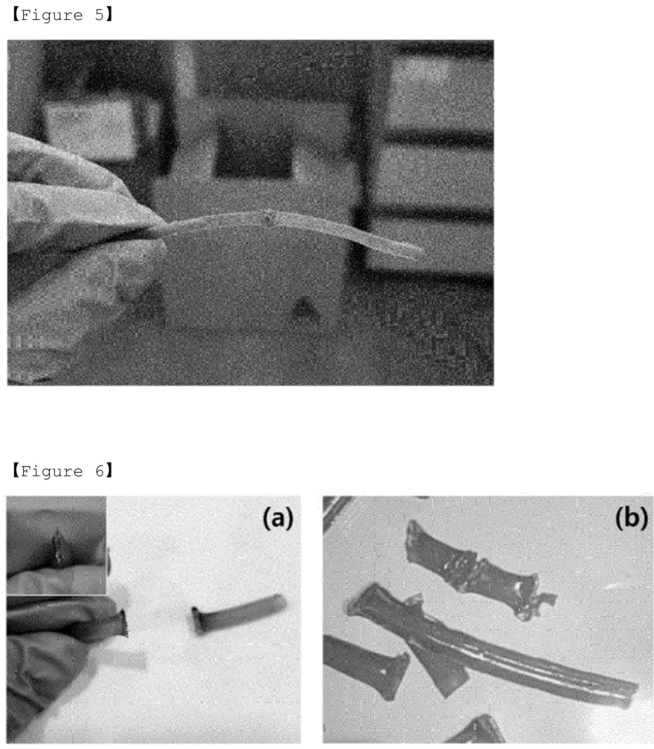

After manufacturing, the mechanical properties were measured using a tensile tester device (manufactured by Mark) as follows, and the electrical conductivity of the artificial blood vessel was measured using an LCR meter device and a 4-terminal probe device (both manufactured by Hioki company) as follows.
① Elastic modulus: The elastic modulus was measured by drawing a stress-strain graph while stretching the sample at a rate of 200 mm/min until the sample broke, and then calculating the initial slope of the graph in the elastic region within the graph.
② Tensile strength: The tensile strength was measured by drawing a stress-strain graph while stretching the sample at a rate of 200 mm/min until the sample broke, and then extracting the maximum stress value from the graph. The results are illustrated in FIGS. 2 and 3.
③ Electrical conductivity: The sample was manufactured flat with a thickness of 5 mm, and then, the electrical conductivity was measured using an LCR meter by contacting it with a 4-terminal probe. Each sample was measured 5 times and the average value was obtained.
④ Stickiness experiment: The manufactured artificial blood vessels of Examples 27 and 28 were cut into 2 cm sizes, and the artificial blood vessels were placed on substrates made of nitrile, glass, polyester, and polystyrene at a high gradient of about 90° to check whether the artificial blood vessels flowed down, thereby checking the surface stickiness of the artificial blood vessels. The results are shown in FIG. 4.
⑤ Suture experiment of artificial blood vessel: Two specimens of the manufactured artificial blood vessel of Example 28 were prepared, sutured using an anastomosis method, and then, distilled water was injected into the sutured artificial blood vessel to observe whether there was any leakage at the sutured area. The results are shown in FIG. 5. In addition, the suture of the artificial blood vessel of Example 28 was observed using a harmonic scalpel device (a) and a bipolar forceps device (b). The results are shown in FIG. 6.

### 2. Result of experiment

The results of the experiment are shown in Table 6 below.

**[Table 6]**

| | FeCl₃ Whether or not the FeCl₃ solution is impregnated | Elastic modulus (kPa) | Tensile strength (kPa) | Electrical conductivity (mS/m) |
|---|---|---|---|---|
| Example 23 | X | 15.48 | 116.16 | 113 |
| Example 24 | O | 184.08 | 543.73 | 590 |
| Example 25 | X | 28.35 | 111.49 | 115 |
| Example 26 | O | 255.62 | 580.47 | 497.5 |
| Example 27 | X | 37.4 | 101.42 | 81.25 |
| Example 28 | O | 200.55 | 388.68 | 727 |
| Example 29 | X | 41.96 | 207.33 | 91 |
| Example 30 | O | 278.12 | 510.27 | 474 |
| Example 31 | X | 21.23 | 204.83 | 77.56 |
| Example 32 | O | 228.35 | 432.69 | 490.25 |
| Example 33 | X | 28.6 | 305.13 | 104.5 |
| Example 34 | O | 274.71 | 462.67 | 538 |

As can be seen in Table 6 above, it can be seen that in the case of the Examples impregnated with FeCl₃ solution among the artificial blood vessels manufactured through 3D printing, elastic modulus, tensile strength, and electrical conductivity all increase significantly compared to artificial blood vessels that are not impregnated.

In addition, it can be confirmed that in the case of Example's artificial blood vessels impregnated with FeCl₃ solution, the surface stickiness phenomenon is reduced, and suturing by anastomosis method, harmonic scalpel device, and bipolar forceps device is also performed effectively.

In the above, although preferred Examples of the present invention have been described in detail, the scope of the present invention is not limited thereto, and various modifications and improvements made by those skilled in the art using the basic concept of the present invention defined in the following claims also fall within the scope of the present invention.

## Claims

1. A hydrogel composition for 3D printing, comprising:
an acrylamide-based compound;
a hydrophilic thickener;
an alkali compound; and
a solvent.

2. The hydrogel composition for 3D printing of claim 1, wherein the acrylamide-based compound comprises acrylamide, metacrylamide, N-isopropylacrylamide(NIPAM), N-tert-butyl acrylamide, N,N-diethylacrylamide, N-ethylacrylamide, N-n-propylacrylamide, N,N-ethylmethylacrylamide, N-isopropylmethacrylamide, N-hydroxyethylacrylamide, N-(isobutoxymethyl)acrylamide, N-tert-butyl methacrylamide, N,N-diethylmethacrlamide, N-ethylmethacrylamide, or any combination thereof.

3. The hydrogel composition for 3D printing according to claim 1, wherein the hydrophilic thickener comprises carbomer, laponite, Pluronic copolymer, or any combination thereof.

4. The hydrogel composition for 3D printing according to claim 1, wherein the alkali compound comprises sodium hydroxide (NaOH), potassium hydroxide (KOH), triethanolamine, arginine, or any combination thereof.

5. The hydrogel composition for 3D printing according to claim 1, wherein the composition further comprises one or more biocompatible polymers selected from the group consisting of natural polymers and synthetic polymers.

6. The hydrogel composition for 3D printing according to claim 5, wherein the natural polymer comprises cellulose, algin, alginic acid, alginate, hyaluronic acid, polypeptide, protein, gelatin, collagen, albumin, dextran, starch, casein, chitin derivative, chitosan, or any combination thereof.

7. The hydrogel composition for 3D printing according to claim 5, wherein the synthetic polymer comprises polyethylene, polyethylene glycol, polycaprolactone, polyalkyl carbonate, polyamino acid, polyhydroxybutyric acid, polyorthoester, polyanhydride, Pluronic, polylactide, polyglycolide, polybutylene succinate, poly(3-hydroxybutyrate-co-3-hydroxyvalerate), polybutylene terephthalate, polytrimethylene terephthalate, polyethylene naphthalene, polylactide-co-glycolide, (polylactide-co-glycolide)-glucose, methoxy polyethylene glycol-(polycaprolactone-co-polylactide), or any combination thereof.

8. The hydrogel composition for 3D printing according to claim 1, wherein the composition further comprises a crosslinking agent and an initiator.

9. The hydrogel composition for 3D printing according to claim 1, wherein the acrylamide-based compound is contained in an amount of 20 to 60 parts by weight based on 100 parts by weight of the solvent.

10. The hydrogel composition for 3D printing according to claim 1, wherein the hydrophilic thickener is contained in an amount of 1 to 7 parts by weight based on 100 parts by weight of the solvent.

11. The hydrogel composition for 3D printing according to claim 1, wherein the alkali compound is contained in an amount of 0.1 to 5 parts by weight based on 100 parts by weight of the solvent.

12. The hydrogel composition for 3D printing according to claim 5, wherein the biocompatible polymer is contained in an amount of 0.1 to 6 parts by weight based on 100 parts by weight of the solvent.

13. The hydrogel composition for 3D printing according to claim 1, wherein the hydrogel composition for 3D printing is used for Direct Ink Writing (DIW) type 3D printing.

14. A 3D printing hydrogel formed using the composition according to any one of claims 1 to 13.

15. The 3D printing hydrogel according to claim 14, wherein an elastic modulus of the 3D printing hydrogel is 10 to 300 kPa.

16. The 3D printing hydrogel according to claim 14, wherein a tensile strength of the 3D printing hydrogel is 100 to 1,200 kPa.

17. The 3D printing hydrogel according to claim 14, wherein the tensile of the 3D printing hydrogel is 0.1 to 15.0 MJ/m³.

18. The 3D printing hydrogel according to claim 14, wherein the 3D printing hydrogel is an artificial blood vessel.
